# EUROPEAN PATENT SPECIFICATION

(11) **EP 1 907 224 B1**
(45) Date of publication and mention of the grant of the patent: **02.09.2009**
(21) Application number: 06765912.8
(22) Date of filing: 27.06.2006
(51) Int. Cl.: B44F 1/00, G02B 5/18, B29C 59/02

(54) **METHOD FOR PROVIDING A UTENSIL WITH A DECORATIVE INTERFERENCE GRATING**
VERFAHREN ZUR AUSSTATTUNG EINES GERÄTES MIT EINEM DEKORATIVEN INTERFERENZGITTER
PROCÉDÉ DE POURVOIR UN USTENSILE D'UN RÉSEAU D'INTERFÉRENCE DÉCORATIF

(30) Priority: 30.06.2005 EP 05105911
(43) Date of publication of application: 09.04.2008
(73) Proprietor: Koninklijke Philips Electronics N.V., 5621 BA Eindhoven (NL)
(72) Inventor: VERSCHUUREN, Marcus, A., NL-5656 AA Eindhoven (NL); PEETERS, Martinus, P., J., NL-5656 AA Eindhoven (NL); WERKMAN, Pieter, J., NL-5656 AA Eindhoven (NL); SURIANTO, Jenfry, NL-5656 AA Eindhoven (NL)
(74) Representative: Damen, Daniel Martijn
(86) International application number: PCT/IB2006/052133
(87) International publication number: WO 2007/004128

(56) References cited:
- WO-A-98/13434
- WO-A-98/30923
- WO-A-20/04049761
- US-A- 5 234 717
- US-A- 5 861 113
- US-B1- 6 185 043
- US-B1- 6 291 070
- US-B1- 6 555 236

## Description

### BACKGROUND OF THE INVENTION

The invention relates to a method for providing a utensil with a decoration. A decoration in this application is understood to be an ornament, but it can also be a picture, a figure, or a text. Utensils, and in particular utensils for personal care may be provided with a coating of lacquer. It has been found that many compositions for personal care contain ingredients which may corrode the coating of lacquer. Particularly shaving lotions, such as preshaves and aftershaves, are found aggressive relative to the coating of lacquer. A good resistance to acids, bases and solvents is obtained by a coating of lacquer that contains a network of a hydrolytically condensed organosilane compound. Coatings of lacquer that contain a network of a hydrolytically condensed organosilane compound are known per se. These materials are typically obtained by means of a sol-gel process.

In order to give the utensil an attractive e.g. metallic appearance the coating may contain metal particles, such as the so-called mother-of-pearl pigment. By screen-printing such a pigment can also be applied in the form of a decoration.

Another application of a network of a hydrolytically condensed organosilane compound provided with a decoration is found in irons. Irons may comprise e.g. an anodised aluminium soleplate, which can be covered with a protective and low friction coating, based on a sol-gel layer. An iron typically has a sol-gel based layer because of its good resistance to high temperatures. The protective coating then generally comprises a basecoat and a topcoat. The topcoat can be filled with silica, PTFE (Teflon^{®}) and/or iriodine (i.e. mica particles) to decrease its friction coefficient or for a desired optical effect. Here, a decoration may be printed under the topcoat onto the basecoat. This can also be done by screen-printing a sol-gel with pigment ink. However, the resolution of screen printing is limited to about 50-to 100 microns, which limits the quality of the decoration.

The document US-A-5 234 717 discloses a method for providing a substrate with a sol-gel precursor which is embossed to create an optical interference grating and then cured.

### SUMMARY OF THE INVENTION

It is an object of the invention to provide a method which produces decorations with a higher resolution.

This and other objects are achieved by the features of claim 1.

With the method of the invention decorations with a resolution in the order of hundreds of nanometres can be produced. An interference grating generally consists of beam like features with dimensions that are of the same order as the wavelength of light. For visible light, these dimensions are between 100 nm to several microns. The grating refracts certain wavelengths at certain angles, giving it a lively colour. Known interference gratings are made using optical lithography and vacuum sputter deposition techniques. These are expensive processing steps and can therefore not be applied to iron soles. By a flexible (e.g. rubber) stamp, features of 100 nm can be replicated in a fast and cheap manner.

By the method of the invention several other advantages are achieved. First of all, an interference grating offers a new method of manufacturing attractive and forgery-proof decorations.

Another advantage of the method of the invention is that the colour of the decoration is not limited in high temperature applications like e.g. the sole of an iron. In known decorations, provided with a pigment ink that are subjected to elevated temperatures, the choice of colours is limited due to insufficient thermal stability of some pigment inks.

In the method of the invention the utensil is provided with a first sol-gel precursor. A sol-gel precursor generally comprises an organosilane compound and silica particles, in particular colloidal silica particles. A preferred organosilane compound is a silane, forming a hybrid sol-gel precursor. A hybrid sol-gel precursor comprising an organosilane compound is understood to be a compound comprising silicon, which is bonded to at least one non-hydrolysable organic group, and 2 or 3 hydrolysable organic groups.

In particular, the hybrid sol-gel precursor may comprise an organosilane compound from the group of alkyl-alkoxysilanes. Preferably, the hybrid sol-gel precursor may comprise a colloidal silica (e.g. Ludox^{®}) and methyl-trimethoxysilane (MTMS) and/or methyl-triethoxysilane (MTES). Hybrid sol-gel precursors such as MTMS and MTES are known to have excellent temperature stability up to at least 450 °C. Spray coating is a well known method for the applying a sol-gel precursor onto a substrate.

However, in order to better control the thickness of the layer, screen printing is a more accurate technique. In the present invention the layer is preferably obtained from a concentrated prepolymerized sol-gel precursor. By using such a concentrated prepolymerized sol-gel precursor the amount of shrinking during curing is reduced considerably. The reduced amount of shrinking permits the use of accurate screen-printing technique to apply the layer on a substrate.

A prepolymerized organosilane precursor is generally a network that comprises one or more of the following units: R₁R₂R₃SiO_{0.5,} R₁R₂SiO, R₁SiO_{1.5}, and SiO_{4/2}, wherein R₁, R₂, and R₃ are independently selected from the group consisting of hydrogen and hydrocarbons of 1-20 carbon atoms. The hydrocarbons can include alkyls such as methyl, ethyl, propyl, butyl and the like, alkenyls such as vinyl, allyl and the like, and aryls such as phenyl: As a higher degree of crosslinking is desired in the final cured product, the average number of hydrocarbon groups on silicon atoms of the prepolymerized sol-gel precursor should approach 1. Curable organosilane compositions containing a variety of reactive groups are known in the art. The type of reactive groups present on a prepolymerized organosilane precursor is determined by the reaction used to cure the composition. When the composition cures by a chemical reaction initiated in the absence of radiation or any other free radical generator, the reactive groups are typically hydroxyl groups, alkoxy groups or alkenyl radicals, and are typically located on the terminal silicon atoms of each molecule of the prepolymerized organosilane precursor.

Mixtures of prepolymers are also useful herein. In a preferred embodiment of the invention, at least one of the above R groups is methyl, because of the high resistance against oxidation of the resulting cured organosilane compound. Such materials often form better coatings and have improved properties at high temperatures. Especially preferred silicone resins include units of the structure MeSiO_{3/2}, MePhSiO_{2/2}, PhSiO_{3/2} and Ph₂SiO_{2/2}. Such resins are known in the art and commercially available (e.g. Wacker Silres 610).

Sol-gel precursors are generally diluted/dissolved in solvents for the processing herein. Suitable solvents are known in the art and can include, for example, organic solvents such as aromatic hydrocarbons (e.g., xylene, benzene or toluene), alkanes (e.g., n-heptane, decane or dodecane), alcohols, ketones, esters, ethers, or inorganic solvents such as low molecular weight dimethylpolysiloxanes. The amount of solvent used varies depending on the resin, any additives and the processing but can be, for example, in the range of between about 10 and about 90 wt. % based on the weight of the resin.

In order to delimit the amount of shrinkage, the amount of solvent present is less than 40 wt%. In a more preferred embodiment, the amount of solvent is 15-25 wt%.

Subsequently the sol-gel precursor is embossed to create an optical interference grating by placement of a flexible stamp. The flexible stamp can e.g. be a rubber stamp. A preferred rubber suitable for the stamp is a silicone based rubber like polydimethylsilane (PDMS). Silicone based rubber have the advantage that most of the solvents used for the precursors are absorbed by the silicon rubber of the stamp, which facilitates the solidification of the sol-gel layer before the stamp is removed. If the sol-gel layer is solidified by means of UV, the stamp should be translucent as well. There are several principles for transferring a pattern from a stamp to a sol-gel layer.

The first printing principle comprises pressing stamp and sol-gel layer against each other, wherein the stamp and the sol-gel layer contact each other through a plane. An important advantage of this first printing principle is that the alignment of the stamp and the sol-gel layer with respect to each other can be performed very accurately. An important disadvantage of this printing principle is that on moving of the stamp and the sol-gel layer towards each other, air may be entrapped between the sheets. As a result, the transfer of the pattern may be incomplete. However, this disadvantage can be overcome by carrying out the procedure as described above under a reduced pressure. The pressure should then be reduced to a pressure slightly above the vapour pressure of the solvent in the sol-gel layer. Embossing under a reduced pressure is particular advantageous at curved surfaces.

A second printing principle is described in WO 03/099463, and comprises the following steps: positioning the stamp and the sol gel layer with respect to each other, in such a way that the stamping surface and the receiving surface face each other; fixing the positions of the stamp and the sol gel layer with respect to each other in a direction in which the receiving surface extends; moving a first portion of at least one of the stamping surface and the receiving surface forward in a direction substantially perpendicular to the receiving surface, such that a first transfer area is created between the stamping surface and the receiving surface, in which the stamp is able to locally transfer the pattern to the sol gel layer; and subsequently moving a second portion of at least one of the stamping surface and the receiving surface forward in a direction substantially perpendicular to the receiving surface, such that an enlarged transfer area is created between the stamping surface and the receiving surface, in which the stamp is able to locally transfer the pattern to the sol gel layer. By this method it is possible to control the movements of the portions of the stamping surface in such a way that a pattern on the receiving surface can be obtained, without the inclusion of air. The stamp may be moved backward after the embossed sol-gel layer is solidified to en extend that the embossed structure of the grating is maintained.

A third printing principle, advantageous for embossing of uneven surfaces is to unroll a stamp, which is formed by a sheet wrapped up around a cylinder, over a sol-gel layer. In order to attain sufficient contact between the stamp and the sol-gel layer, the cylinder is preferably made of a foamed material, flexible enough to follow the uneven surface.

After the layer is embossed with an optical interference grating the layer is cured. Depending on the temperature at which the layer is cured, the stamp is removed before or after the curing. At low temperatures the stamp may be present during curing. When the curing occurs at higher temperatures, it it preferred to remove the stamp before curing. Then, the sol-gel layer may be solidified to a layer which maintains the optical interference grating when the stamp is removed. The sol-gel layer is then cured after the stamp is removed.

In order to increase the index of refraction, the first sol-gel precursor may be based on, or comprise a tetra-alkyl ortho-titanate or aluminate.

In utensils like an iron a flat surface is desired. To obtain a flat surface on top of the grating, the grating is covered with a second sol-gel layer. In order not to lose the refractive properties of the grating, the interference grating is provided with a second precursor of a material with an index of refraction higher than that of the first sol-gel layer, which is subsequently cured thus forming a high refractive grating.
The second sol-gel precursor may be based on a tetra-allcyl ortho-titanate or aluminate; both materials being commercially available.

The application of the second precursor comprising a material with an index of refraction higher than that of the first sol-gel layer, allows the first sol-gel precursor to comprise a compound that absorbs light in the wavelength range for which the interference grating is designed to refract light. This ensures that the light that comes back to the observer is coming from the grating only. The colour depends on the viewing angle. The high refractive coating may be provided with a transparent, non-scattering topcoat to obtain the desired flat surface, and protects the grating structure against mechanical damaging. The topcoat is preferably as transparent and non-scattering as possible to ensure the light that reaches the grating can interfere and that the light reflecting from the grating is not blurred due to scattering. If the topcoat scatters the incoming light the optical effect of the grating will be less.

It is noted that an appliance, can be coated with an organosilane layer, where the organosilane layer is provided with an optical interference grating. Examples of such appliances are irons, with a decoration e.g. on its sole, shavers, a coffee apparatus with a decorated hotplate, a pan and on other products that use sol-gel or UV curable coatings.

### BRIEF DESCRIPTION OF THE DRAWINGS

Fig. 1A to 1C shows the manufacturing of the flexible stamp from a master grating.
Fig. 2A to 2C shows the embossing to create an optical interference grating by placement of the flexible stamp.
Fig. 3A to 3C shows the application of a second precursor of a material with an index of refraction higher than that of the sol-gel layer. In 3D a second sol gel layer is applied on top of said material with the higher refraction index.
Fig. 4A and 4B shows SEM pictures of a refractive grating. In Fig. 4C and 4D a transparent, non-scattering topcoat is provided.
Fig. 5A and 5B shows optical pictures of the interference colours on an aluminium disk with a black sol-gel precoat.

### DETAILED DESCRIPTION OF THE PREFERRED EMBODIMENT

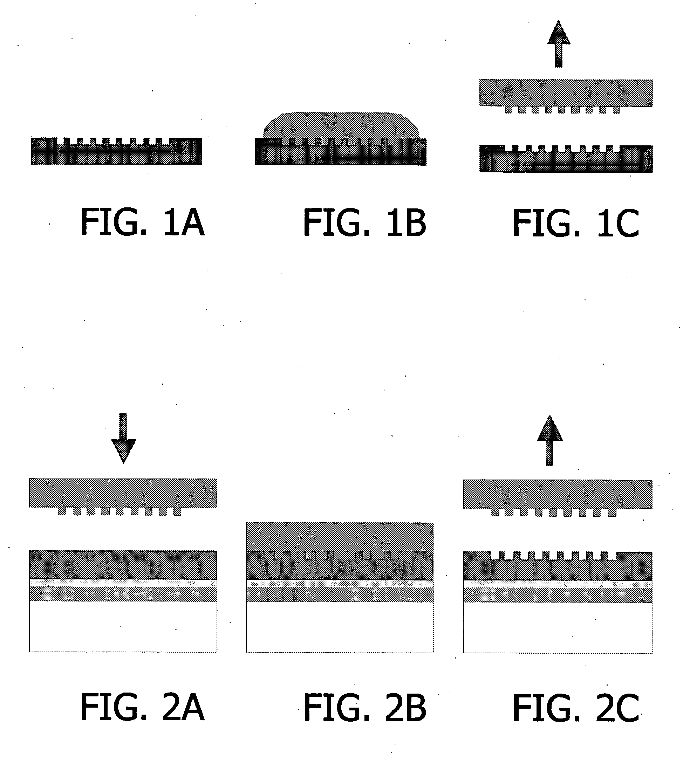

Fig. 1 shows the manufacturing of a flexible stamp that is moulded from a master grating. Fig. 1A shows a lithographically produced master, e.g. a silicon wafer. In Fig. 1B a liquid polydimethyl siloxane (PDMS) precursor is poured over the master. After the liquid is cured thermally or by UV, the flexible stamp is peeled off as shown in Fig. 1C. Although PDMS has been exemplified for making the elastomeric master, other elastomeric materials can be employed. Preferred elastomers are those to which the photorecording medium that is desired to be moulded does not substantially adhere.

The utensil is provided with a first sol-gel precursor. After spraying or screen printing the first sol-gel precursor on the substrate the layer is in a gel state (Fig. 2A). During this state a grating structure is embossed in the soft sol-gel as shown in Fig. 2B. The sol-gel is then solidified to a layer which maintains the shape of the optical interference grating when the stamp is removed (Fig. 2C). This can be done by drying, e.g by heating to about 60° C or by irradiation with UV. In the latter case a UV sensitive silicon precursor should be added to the sol-gel precursor. An example of such a UV sensitive silicon precursor that can be used is methacryloxypropyl trimethoxysilane (MEMO). In utensils that are used at an elevated temperature like an iron or a hot-plate, the amount of MEMO in the mixture should be not more than 30 wt% with respect to the amount of alkyl-alkoxysilanes, because of the lower thermal stability of the MEMO material. If this precursor is added to the alkyl-alkoxysilane, during hydrolysis the acrylate precursor is build into the network. After a short illumination step the structure will be maintained in the layer.

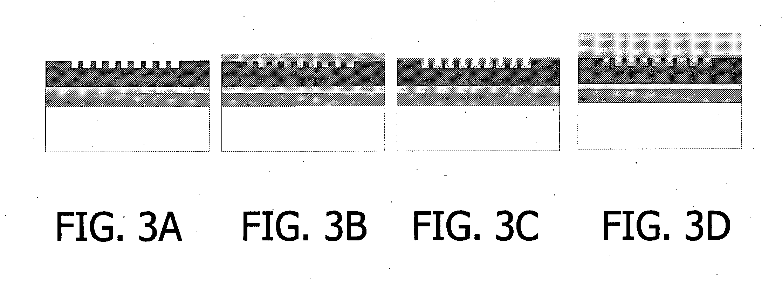

Fig. 3A shows the sol-gel layer after the stamp has been peeled of. The grating reflects certain wavelengths because of the periodic contrast in index of refraction, which is: grating material and air. The sol-gel layer consists of silica particles (needed to achieve the desired thickness in an MTMS matrix and has an index of refraction of about 1.4. If this grating is directly covered with a topcoat, which preferably consist of silica, PTFE and MTMS, also with an index of refraction of about 1.4, there will no longer be a periodic contrast in index of refraction, and thus no refracted light Therefore the grating is covered with a material that has a higher index of refraction. Fig 3B shows the grating which is sprayed with e.g. a sol-gel titanium oxide precursor. Fig. 3C shows the grating with the cured titanium oxide sol-gel layer, with the higher index of refraction.

A titanium oxide sol-gel is easily prepared from a wet chemical route. A typical preparation starts with a tetra-alkyl ortho-titanate precursor as a titanium source, which is combined with alcohols and acid. Suitable acids are acetic acid, formic acid, maleic acid and hydrochloric acid. This route gives a titanium oxide sol-gel layer with and index of refraction between 1.8 and 2.3, depending of curing temperature and wavelength. After the titanium oxide sol-gel is formed by curing, the grating can be embedded in a topcoat as shown in fig.3D.

For optimum optical effect, the utensil has to be smooth. When this is not the case, as e.g. with aluminium ironing soles that are whitish scattering, a precoat has to be applied. This precoat preferably absorbs light in the wavelength range, for which the grating was designed to refract light. If the underlying layers scatter light back to the observer, through the grating, the optical effect of the grating is lost in the background noise.

### Example

A glass-filled polyamide shaver unit is coated with a decoration. Therefore 11.8 g of the hydrolytically condensable compound 3-glycidoxy propyl trimethoxysilane (Fluke) and 2.7 g water are stirred for 1 hour, thereby forming a sol-gel solution. Next, 3.28 g Al(O-sec-Bu)3 are mixed with 1.75 g ethyl acetoacetate (Aldrich). The resultant aluminum compound is added to the sol-gel solution, which results in the formation of a clear solution. The resultant lacquer is applied to the housing 2 by means of spraying. An optical grating was applied with a PDMS stamp. The coating was cured for 20 minutes at 80° C and the stamp was removed.

### Embodiment

A black sol-gel is prepared by the following method: A Sol A is made by mixing 7.9 parts of MTMS with 36.5 parts ethanol and adding this mixture to 100 parts of Ludox^{®} AS-40. After hydrolysis for 5 minutes of sol A, the following components are added: 95.3 parts of MTMS, 1.8 TEOS, 29.9 alumina CR-6, 4.5 Heucodor Black 100-9 and 18.3 parts of ethanol. The thus formed sol B is hydrolysed for 5 minutes. Sol C is prepared by adding 1.76 parts of maleic acid to sol B and hydrolysed for 45 minutes under vigorous stirring. All parts are parts in weight.
An anodised aluminium disk was coated with the thus obtained black pre coat, which was subsequently cured at 250° C. The black coating was given a UV-ozone treatment during 10 minutes to oxidise its surface and make this hydrophilic. This ensures a good adhesion for the next layer. Subsequently a transparent sol-gel layer was applied, which was structured by embossing. A transparent sol-gel layer may have the following composition: 8 parts Ludox^{®} TM 50, colloidal in water; 7.5 parts MTMS and 1.2 parts of formic acid. This transparent sol-gel layer was embossed and dried until the sol-gel layer maintains the optical interference grating when the stamp is removed. The stamp was removed and the layer was cured at 250° C.
After curing the embossed layer and the UV-ozone treatment, the high index materials is applied. This consists of a stabilised titanium-iso-propoxide solution and is prepared from sol D and sol E:
Sol D is prepared by adding 6.15 parts of butoxyethanol and subsequently 3.67 parts of ethyl-acteto-acetonate to 4 grams of titanium-iso-propoxide and stirring until a homogeneous mixture is obtained.
Sol E is a mixture oaf 6.15 parts of butoxyethanol with 0.0317 parts of water. Sol E is subsequently quickly added to sol D. The titanium forms a complex with the ethyl-acteto-acetonate that is more resistant to moisture.

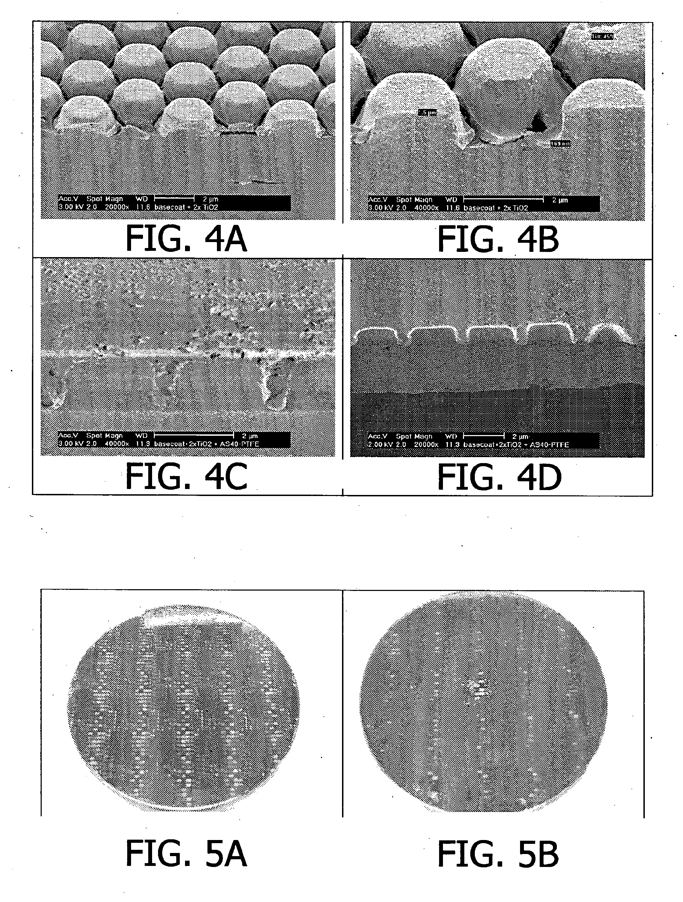

The TiO₂ sol-gel layer is applied from a solution with a low concentration to avoid cracking to TiO₂ layers that are thicker than 200 nm, when applied at once. Typical concentrations are between 0.07 and 0.7 M TiO₂. The applied TiO₂ is cured at 250 °C. Fig. 4A shows the resulting embossed basecoat with 2 layers of TiO₂, with an enlargement in Fig. 4B. Preferably two to three layers are applied in order to completely cover the surface of the grating.

Next the optical grating is covered with a transparent top-coat. A transparent PTFE filled top-coat can be prepared according to the following method: Sol F is made by mixing 7.9 parts of MTMS with 36.5 parts ethanol, after which 100 parts of Ludox^{®} AS-40 are added. After 5 minutes of hydrolysis Sol G is prepared by adding 95.3 parts of MTMS to Sol F. Sol G is hydrolysed for 5 minutes and 1.76 parts of maleic acid are added After 45 minutes of hydrolyses the following components were added to the mixture: 51.5 parts of deionised water, 3.86 parts of Zonyl FS-300, 92.1 parts of PTFE suspension in water and 7.7 parts of Zonyls Fez-300. All parts in weight and under vigorous stirring.

After application of the transparent topcoat the system is cured at 250° C. Fig. 4D shows an embossed basecoat with two layers of TiO₂, covered with a PTFE topcoat. An enlargement thereof is shown in Fig. 4C. These steps create the interference effects shown in figure 5. On the disk different gratings and periods are shown.

## Claims

1. Method for providing a ustensil with a decoration presenting a flat surface, the decoration being such as an ornament, a picture, a figure or a text, wherein the utensil is provided with a first sol-gel precursor forming a layer, which layer is embossed to create an optical interference grating by placement of a flexible stamp, and wherein
the layer is cured, **characterized in that**
a. the interference grating is provided with a second sol-gel precursor of a material with an index of refraction higher than that of the first sol-gel layer,
b. the second precursor is cured thus forming a high refractive grating.

2. Method according to Claim 1, wherein the high refractive grating is provided with a transparent, non-scattering topcoat.

3. Method according to claim 1, wherein the first sol-gel precursor comprises a compound that absorbs light in the wavelength range for which the interference grating is designed to refract light.

4. Method according to claim 1, wherein the first sol-gel precursor is a hybrid sol-gel precursor comprising an organosilane compound.

5. Method according to claim 4, wherein the organosilane compound comprises methyl-trimethoxysilane (MTMS), or methyl-triethoxysilane, MTES.

6. Method according to claim 1, wherein the first sol-gel precursor comprises methacryloxypropyl trimethoxisylane (MEMO).

7. Method according to claim 1, wherein the second sol-gel precursor comprises tetra-alkyl ortho-titanate.

8. Method according to claim 2, wherein the topcoat comprises an organosilane compound, filled with silica and a PTFE suspension.

9. Iron comprising a decoration, wherein the decoration is obtainable by the method according to claim 1.

## Patentansprüche

1. Verfahren zur Ausstattung eines Geräts mit einer Dekoration, welche eine ebene Oberfläche zeigt, wobei die Dekoration z.B. ein Ornament, ein Bild, eine Figur oder ein Text ist, wobei das Gerät mit einem ersten Sol-Gel-Precursor versehen wird, der eine Schicht bildet, welche so geprägt wird, dass durch Platzieren eines flexiblen Stempels ein optisches Interferenzgitter erzeugt wird, und wobei
die Schicht gehärtet wird, **dadurch gekennzeichnet, dass**
a) das Interferenzgitter mit einem zweiten Sol-Gel-Precursor aus einem Material mit einem höheren Brechungsindex als diesem der ersten Sol-Gel-Schicht versehen wird,
b) der zweite Precursor gehärtet wird und somit ein hoch brechendes Gitter bildet.

2. Verfahren nach Anspruch 1, wobei das hoch brechende Gitter mit einer lichtdurchlässigen, nicht streuenden Deckschicht versehen ist.

3. Verfahren nach Anspruch 1, wobei der erste Sol-Gel-Precursor eine Verbindung umfasst, die Licht in dem Wellenlängenbereich absorbiert, für den das Interferenzgitter zum Brechen von Licht ausgelegt ist.

4. Verfahren nach Anspruch 1, wobei der erste Sol-Gel-Precursor ein hybrider Sol-Gel-Precursor mit einer Organosilanverbindung ist.

5. Verfahren nach Anspruch 4, wobei die Organosilanverbindung MethylTrimethoxysilan (MTMS) oder Methyl-Triethoxysilan (MTES) umfasst.

6. Verfahren nach Anspruch 1, wobei der erste Sol-Gel-Precursor Methacryloxypropyl-Trimethoxysilan (MEMO) umfasst.

7. Verfahren nach Anspruch 1, wobei der zweite Sol-Gel-Precursor Tetraalkylorthotitanat umfasst.

8. Verfahren nach Anspruch 2, wobei die Deckschicht eine Organosilanverbindung, gefüllt mit Siliciumdioxid und einer PTFE-Suspension, umfasst.

9. Eisen mit einer Dekoration, wobei die Dekoration durch das Verfahren nach Anspruch 1 vorgesehen werden kann.

## Revendications

1. Procédé pour munir un ustensile d'une décoration présentant une surface plate, la décoration étant un ornement, une image, une figure ou un texte, dans lequel l'ustensile est pourvu d'un premier précurseur de sol-gel qui constitue une couche, laquelle couche est mise en relief de manière à créer un réseau interférentiel optique par le placement d'une matrice flexible, et dans lequel
la couche est durcie, **caractérisé en ce que**
a. le réseau interférentiel est pourvu d'un deuxième précurseur de sol-gel d'un matériau avec un indice de réfraction qui est supérieur à celui de la première couche de sol-gel,
b. le deuxième précurseur est durci, ainsi constituant un réseau de réfraction élevée.

2. Procédé selon la revendication 1, dans lequel le réseau de réfraction élevée est pourvu d'une couche de finition transparente non diffusante.

3. Procédé selon la revendication 1, dans lequel le premier précurseur de sol-gel comprend un composé qui absorbe de la lumière dans la gamme de longueurs d'onde pour laquelle le réseau interférentiel est conçu de manière à réfracter de la lumière.

4. Procédé selon la revendication 1, dans lequel le premier précurseur de sol-gel est un précurseur de sol-gel hybride qui comprend un composé de silane organique.

5. Procédé selon la revendication 4, dans lequel le composé de silane organique comprend du triméthoxysilane de méthyle (MTMS) ou du triéthoxysilane de méthyle (MTES).

6. Procédé selon la revendication 1, dans lequel le premier précurseur de sol-gel comprend du triméthoxysilane de méthacryloxypropyle (MEMO).

7. Procédé selon la revendication 1, dans lequel le deuxième précurseur de sol-gel comprend de l'ortho-titanate de tétra-alcoyle.

8. Procédé selon la revendication 2, dans lequel la couche de finition comprend un composé de silane organique qui est rempli de silice et d'une suspension PTFE.

9. Fer à repasser comprenant une décoration, dans lequel la décoration peut être obtenue par le procédé selon la revendication 1.
